(19) Europäisches Patentamt
European Patent Office
Office européen des brevets

(11) Veröffentlichungsnummer: **0 262 407 B1**

(12) **EUROPÄISCHE PATENTSCHRIFT**

(45) Veröffentlichungstag der Patentschrift: **29.07.92**

(51) Int. Cl.5: **G02B 13/04**, G02B 9/62

(21) Anmeldenummer: **87112527.4**

(22) Anmeldetag: **28.08.87**

# (54) Kompakt-Weitwinkel-Objektiv.

(30) Priorität: **02.09.86 DE 3629773**

(43) Veröffentlichungstag der Anmeldung:
**06.04.88 Patentblatt 88/14**

(45) Bekanntmachung des Hinweises auf die Patenterteilung:
**29.07.92 Patentblatt 92/31**

(84) Benannte Vertragsstaaten:
**AT CH DE FR GB LI**

(56) Entgegenhaltungen:
**DD-A- 148 391**
**DE-A- 2 426 213**
**DE-B- 1 921 418**
**DE-C- 1 279 959**
**US-A- 4 211 472**

**SOVIET INVENTIONS ILLUSTRATED, Section Physics, Woche K22, 13. Juli 1983, Zusammenfassungsnr. H 4009 K/22, Derwent Publications Ltd., London, GB; & SU - A - 945 840 (VOLOSOV, D.S.) 14.07.1980**

**Prospectblatt "Grandagon" von Rodenstock "EBC-Fujinon SWDS/EBC Fujinon NSWS" von Fuji.**

(73) Patentinhaber: **Jos. Schneider Optische Werke Kreuznach GmbH & Co. KG**
**Ringstrasse 132**
**W-6550 Bad Kreuznach(DE)**

(72) Erfinder: **Schitthof, Hiltrud**
**Schwabenstrasse 2**
**W-6531 Schweppenhausen(DE)**

(74) Vertreter: **Beckensträter, Friedrich Wilhelm, Dr.**
**Falkensteiner Strasse 23**
**W-6000 Frankturt am Main 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Weitwinkelobjektiv aus sechs Gliedern, acht Linsen und einer Blende, dessen zentraler sammelnder Objektivteil, bestehend aus zwei Kittgliedern und zwei einzelstehenden Linsen, objektseitig von einem negativen Meniskus und bildseitig von einer Negativlinse umschlossen wird.

Es sind Weitwinkelobjektive bekannt, bei denen üblicherweise Linsensysteme mit symmetrischer Anordnung der Einzellinsen und Kittglieder verwendet werden. Beispiele sind: "Super-Angulon" (Schneider, DE-PS 1 279 959), "Grandagon" (Rodenstock, 1977). "EBC Fujinon-SWDS" (Fuji, 1982). Davon besteht das Weitwinkelobjektiv "EBC Fujinon-SWDS" in Anordnung von der Objektseite zur Bildseite aus einer negativen Meniskuslinse, einer positiven Linse, einem negativen Linsenglied bestehend aus einer positiven Linse und einer negativen Linse, der Blende, einem negativen Linsenglied bestehend aus einer positiven Linse und einer negativen Linse, einer positiven Meniskuslinse sowie einer negativen Meniskuslinse. Ein Nachteil dieser herkömmlichen Linsensysteme - auch des letztgenannten - ist, daß die relativ große Baulänge und die großen vorderen und hinteren Linsendurchmesser den Einbau in Kameras erschweren und die Verstellmöglichkeiten einer Großbildkamera einschränken. Infolge großer Luftabstände der äußeren Negativlinsen zu ihren benachbarten Positivlinsen oder Gliedern wird die Abbildungsleistung für kurze Aufnahmeentfernungen und/oder bei voller Öffnung im Vergleich zu Normalsystemen gemindert.

Der Erfindung liegt die Aufgabe zugrunde, eine Alternative zwischen Normalobjektiv mit kompakter Bauweise und guter Korrektion für volle Öffnung und einem Weitwinkelobjektiv mit voluminöser Bauweise, Maßstabsempfindlichkeit und nur guter Abbildungsleistung im abgeblendeten Zustand, das heißt ein Weitwinkelobjektiv kompakter Bauweise mit geringer Baulänge und kleinen Linsendurchmessern sowie mit guter Abbildungsleistung bei voller Öffnung und bei verschiedenen Entfernungseinstellungen bei einem Bildwinkel von mindestens 70°, bei Abblendung 80°, zu schaffen.

Diese Aufgabe wird erfindungsgemäß durch die im Kennzeichen von Patentanspruch 1 aufgeführten Merkmale gelöst.

Vorteilhafte Ausführungsformen des erfindungsgemäßen Kompakt-Weitwinkelobjektivs können die Konstruktionsdaten der in den Patentansprüchen 2 und 3 angeführten Datentabellen aufweisen.

Durch die Erfindung wird ein Kompakt-Weitwinkelobjektiv mit hoher Abbildungsleistung geschaffen, das besonders als Aufnahmeobjektiv für großformatige Kameras mit z.B. einem Bildformat von 90 x 120 mm oder ähnlicher Formatgrößenordnung geeignet ist.

Der gewählte Aufbau dieses Kompakt-Weitwinkelobjektives ist ausgesprochen ungewöhnlich im Vergleich zu bisher bekannten Weitwinkelkonstruktionen und stellt eine grundsätzlich neue Merkmalskombination dar. Durch das Merkmal, daß die sechste Linse bildseitig konkav ist, wird eine gute Bildfeldzonenkorrektur, im besonderen von Komo und Farbquerfehler erreicht, ebenso eine gute Korrektur der vor allen von der Öffnung abhängigen Bildfehler, insbesondere der sphärischen Aberration. Für Strahlenbündel des äußeren Bildfeldbereichs wird die brechende Wirkung der unmittelbar auf die Blende folgenden Linsenfläche, die auch beim Objektiv "EBC Fujiinon-SWDS" auftritt, durch die brechende Wirkung der letzten Linsenfäche im wesentlichen kompensiert. Ebenso ergibt sich für das Mittelbündel eine Kompensation der brechenden Wirkung der Linsenfläche hinter der Blende durch die vorletzte Linsenfläche. Dies gilt bei kleinem Luftabstand zwischen der ersten und zweiten Linse. Zusätzlich ist durch die schwächere Durchbiegung der letzten Linse auch deren Luftabstand von der vorletzten Linse klein. In Richtung einer guten Korrektur der Petzvalkrümmung wirken die die Bedingungen (3) und (4) gemäß Patentanspruch 1.

Die Verbindung der sehr kompakten Bauweise mit der hohen Abbildungsqualität bis zum Rand des Bildwinkels von 80° kombiniert mit relativ hoher Öffnung stellt eine deutliche Verbesserung hinsichtlich der möglichen Arbeitstechnik und Bildqualität im gesamten Entfernungsbereich bei der Anwendung in der Großbildfotografie dar.

Weitere Einzelheiten und Vorteile der Erfindung ergeben sich aus der nachfolgenden Beschreibung von Ausführungsbeispielen anhand der anhängenden Zeichnung.

Es zeigen:

- Fig. 1 in schematischer Darstellung im Schnitt eine Ausführungsform des erfindungsgemäßen Linsensystems im Maßstab 2.0 : 1,
- Fig. 2 die graphische Darstellung der sphärischen Aberration, der Abweichung von der Sinusbedingung, des Astigmatismus und der Verzeichnung eines ersten Ausführungsbeispiels und
- Fig. 3 die graphische Darstellung der sphärischen Aberration, der Abweichung von der Sinusbedingung, des Astigmatismus und der Verzeichnung eines zweiten Ausführungsbeispiels.

Die in Fig. 1 gezeigte Ausführungsform der Erfindung weist nacheinander von der Objektseite zur Bildseite folgende Teile auf: Ein erstes Linsenglied L1 mit negativer Brechkraft, ein zweites Linsenglied L2 mit positiver Brechkraft, das aus einer positiven Linse L2a und einer negativen Linse L2b besteht, ein drittes

Linsenglied L3 mit positiver Brechkraft, ein viertes positives Linsenglied L4 bestehend aus einer positiven Linse L4a und einer negativen Linse L4b, ein fünftes positives Linsenglied L5 und ein sechstes negatives Linsenglied L6. Diese Linsenglieder erfüllen die folgenden Bedingungen:

$$(1)\quad r_1 > r_2$$

$$(2)\quad r_{13} < r_{14}$$

$$(3)\quad n_1 < 1{,}55 \text{ und } n_8 < 1{,}55$$

$$(4)\quad \frac{(n_2 + n_3 + n_4 + n_5 + n_6 + n_7)}{6} > 1{,}62$$

$$(5)\quad (d_2 + d_{12}) < \frac{(d_8 + d_9)}{2}$$

$$(6)\quad (d_7 + d_8 + d_9 + d_{10} + d_{11} + d_{12} + d_{13}) > 0{,}48 \cdot \Sigma d$$

Darin bedeuten $d_2$ bis $d_{13}$ die Dicken der Linsen bzw. Luftabstände zwischen diesen, $n_1$ bis $n_7$ die Brechzahlen der verwendeten Gläser und $\Sigma d$ Summe der Linsendicken und Luftabstände, und $r_1$, $r_2$, $r_{13}$, $r_{14}$ bedeuten die Krümmungsradien der Linsen.

Die vorerwähnten Bedingungen haben im einzelnen folgende Bedeutung.

Die Bedingungen (1) und (2) betreffen das erste L1 und das sechste L6 Linsenglied des Systems.

Für die Korrektion der Bildfeldwölbung und die gleichmäßige Bildfeldausleuchtung eines Großbild-Objektivs, das einen Bildwinkel von mindestens 70° bzw. 80° aufweist, ist die erste Linse L1 mit einer negativen Brechkraft eingesetzt. Dabei ist aus Korrektionsgründen einenegative Meniskuslinse L1 mit einem objektseitig gewölbten, konvexen Radius verwendet. Für die Korrektion der Koma, der Verzeichnung und des Farbquerfehlers über das gesamte Bildfeld ist eine symmetrische Brechkraftfolge der einzelnen Linsen gewählt, wobei die Reihenfolge von Einzellinsen und Kittgliedern (L1 bis L6) nicht symmetrisch sein muß, und es weist das letzte Linserglied L6 ebenfalls eine negative Brechkraft auf. Als Besonderheit ist in das Linsensystem an dieser Stelle eine bikonkave Linse L6 eingesetzt, deren zur Bildebene gewandter Radius $r_{14}$ größer ist als der der Bildebene abgewandte Radius $r_{13}$. Durch diese Maßnahme läßt sich die Korrektion von Koma bei voller Öffnung, der Farbquerfehler und die Farbkoma über das gesamte Bildfeld bei gleichzeitig kleinem Luftabstand $d_{13}$ deutlich verbessern.

Der Einsatz von Gläsern mit niedriger Brechzahl in den äußeren Negativlinsen L1 und L6 - Bedingung (3) - und von hochbrechenden Gläsern in allen anderen Linsen - Bedingung (4) - ist dabei für die Korrektion der Petzvalsumme bei gleichzeitiger Korrektion der Farbfehler und aller anderen Abbildungsfehler und durch die sich daraus ergebenden flacheren Radien in den Linsengliedern L2 bis L5 zweckmäßig.

Der Einsatz von großen Linsendicken bei den inneren Linsengliedern L2 bis L5 ist von Vorteil für die Korrektion von Systemen mit großem Bildwinkel. In bekannten Weitwinkelobjektiven ist diese Maßnahme für Linsenglieder in Blendennähe eingeführt. Für ein System der vorliegenden Form für einen Bildwinkel von mindestens 70° bzw. 80° genügt eine große Linsendicke des vierten Linsengliedes L4 ($d_8$ + $d_9$), was dazu führt, daß das Objektiv leichter ist als im Falle herkömmlicher Systeme. Gleichzeitig ist es für eine gute Korrektion der Bildfeldwölbung, der Koma, des Farbquerfehlers sowie der chromatischen Variation der Queraberrationen im Bildfeld, auch bei kurzen Einstellentfernungen, erforderlich, die Luftabstände $d_2$ und $d_{13}$sehr klein zu halten - Bedingung (5) -.

Die Bedingung (5) entsprechend der Bedingung (1) des Patentanspruchs 1 bedeutet daher, daß die Lufträume der äußeren negativen Linsen gegen die benachbarten weiter innen liegenden Linsen sehr klein

gegen die Dicke des zweiten Kittgliedes sind.

Bekannte Objektive der Doppelgaußart mit großen Luftabständen zwischen den äußeren negativen Meniskuslinsen und den benachbarten positiven Linsengliedern weisen im Gegensatz zu der Eigenschaft des erfindungsgemäßen Objektivs eine deutliche Verschlechterung der Abbildungsqualität beim Übergang zu kurzen Einstellentfernungen auf.

Die erfolgreiche Beschränkung auf eine dicke Linse im blendennahen Bereich und die Minimalisierung der Luftabstände $d_2$ und $d_{13}$ ermöglichen eine kurze Baulänge und im Zusammenhang damit kleine Durchmesser des ersten Linsengliedes L1 und des letzten Linsengliedes L6, was sich gegenüber bekannten Weitwinkelsystemen beim Einbau und bei den Verstellmöglichkeiten einer Großbildkamera günstig auswirkt.

Für die Korrektion aller Abbildungsfehler sind außerdem die Bauhöhen des ersten Teiles des Systems L1 bis L3 und seines zweiten Teiles L4 bis L6 in ähnlicher Länge ausgeführt. Dabei wird die Bedingung (6) erfüllt, um die optimale Abbildungsleistung in der erwähnten Form zu erzielen, was aus den graphischen Darstellungen der Abbildungsfehler in Fig. 2 und Fig. 3 ersichtlich ist.

Darüber hinaus ergibt sich aus Bedingung (6) entsprechend der Bedingung (2) des Patentanspruchs 1, daß die Baulänge des vorderen Systemteils L1 und L4 kleiner oder höchstens nahezu gleich der Baulänge des hinteren Systemteils ist, wodurch eine kurze Baulänge insgesamt erzielt ist.

Ein erstes Ausführungsbeispiel kann die Konstruktionsdaten haben, wie sie im Kennzeichen von Patentanspruch 2 aufgeführt sind, und auf dieses Ausführungsbeispiel beziehen sich die Qualitätsdaten der Fig. 2. Ein zweites Ausführungsbeispiel kann die Konstruktionsdaten haben, wie sie im Kennzeichen des Patentanspruchs 3 aufgeführt sind, und auf dieses Ausführungsbeispiel beziehen sich die Qualitätsdaten der Fig. 3.

**Patentansprüche**

1. Weitwinkelobjektiv aus sechs Gliedern, acht Linsen und einer Blende, dessen zentraler sammelnder Objektivteil, bestehend aus zwei Kittgliedern und zwei einzelstehenden Linsen, objektseitig von einem negativen Meniskus (L1) und bildseitig von einer Negativlinse (L6) umschlossen wird,
**dadurch gekennzeichnet,**
**daß** dessen zentraler Objektivteil aus einem positiven Meniskuslinsenglied (L2), bestehend aus einer positiven Linse (L2a) und einer negativen Linse (L2b), einer positiven Meniskuslinse (L3), einer Blende, einem positiven Linsenglied (L4), bestehend aus einer positiven Linse (L4a) und einer negativen Linse (L4b), und einem positiven Meniskuslinsenglied (L5) aufgebaut ist,
**daß** die darauffolgende Negativlinse (L6) bikonkav ist, wobei deren betragsmäßig größerer Radius der Bildseite zugewandt ist,
**und daß** die folgenden Bedingungen erfüllt sind:

$$(1)\quad d_2 + d_{12} < \frac{(d_8 + d_9)}{2}$$

$$(2)\quad (d_7 + d_8 + d_9 + d_{10} + d_{11} + d_{12} + d_{13}) > 0{,}48 \cdot \Sigma d$$

$$(3)\quad n_1 < 1{,}55 \text{ und } n_8 < 1{,}55$$

$$(4)\quad \frac{n_2 + n_3 + n_4 + n_5 + n_6 + n_7}{6} > 1{,}62$$

Darin sind:

| | |
|---|---|
| $d_2$ bis $d_{13}$ | Axialabstände der Flächen (Linsendicken bzw. Luftabstände) |
| $\Sigma d$ | Summe der Axialabstände der Flächen |
| $n_1$ bis $n_8$ | Brechungsindizes der Linsen 1 bis 8 |

2. Weitwinkel-Objektiv nach Anspruch 1, dadurch gekennzeichnet, daß es die folgenden Daten hat:

**f = 100 mm, Bildschnittweite = 81,9 mm**
**Öffnungsverhältnis = 1 : 5,6 , Bildwinkel = 70 °**
**Öffnungsverhältnis = 1 : 11,0 , Bildwinkel = 80 °**

| | | | |
|---|---|---|---|
| $r_1$ = 39,152 | $d_1$ = 2,517 | $n_1$ = 1,4645 | $\nu_1$ = 65,77 |
| $r_2$ = 20,221 | $d_2$ = 3,510 | | |
| $r_3$ = 29,516 | $d_3$ = 6,523 | $n_2$ = 1,7550 | $\nu_2$ = 52,30 |
| $r_4$ = 87,298 | $d_4$ = 4,967 | $n_3$ = 1,6254 | $\nu_3$ = 35,56 |
| $r_5$ = 29,998 | $d_5$ = 7,000 | | |
| $r_6$ = 48,217 | $d_6$ = 1,987 | $n_4$ = 1,7725 | $\nu_4$ = 49,60 |
| $r_7$ = 55,911 | $d_7$ = 3,312 | | |
| $r_8$ = 321,496 | $d_8$ = 19,312 | $n_5$ = 1,6204 | $\nu_5$ = 60,33 |
| $r_9$ = -19,009 | $d_9$ = 1,987 | $n_6$ = 1,6668 | $\nu_6$ = 33,01 |
| $r_{10}$ = -27,981 | $d_{10}$ = 0,338 | | |
| $r_{11}$ = -117,436 | $d_{11}$ = 5,841 | $n_7$ = 1,6204 | $\nu_7$ = 60,33 |
| $r_{12}$ = -44,848 | $d_{12}$ = 2,583 | | |
| $r_{13}$ = -28,475 | $d_{13}$ = 2,517 | $n_8$ = 1,4787 | $\nu_8$ = 58,70 |
| $r_{14}$ = 131,465 | $\Sigma d$ = 61,816 | | |

worin f die Brennweite des Objektivs, $r_1$ bis $r_{14}$ die Krümmungsradien der Linsenflächen, $d_1$ bis $d_{13}$ die Axialabstände der Flächen, $n_1$ bis $n_8$ die Brechzahlen, $\nu_1$ bis $\nu_8$ die Abbe-Zahlen und $\Sigma$d die Summe der Axialabstände der Flächen bedeuten.

3. Weitwinkel-Objektiv nach Anspruch 1,
dadurch gekennzeichnet, daß es die folgenden Daten hat:

f = 100 mm, Bildschnittweite = 79,98 mm
Öffnungsverhältnis = 1 : 5,6 , Bildwinkel = 70 °
Öffnungsverhältnis = 1 : 11,0 , Bildwinkel = 80 °

| | | | |
|---|---|---|---|
| $r_1$ = 40,585 | $d_1$ = 2,512 | $n_1$ = 1,4645 | $\nu_1$ = 65,77 |
| $r_2$ = 20,329 | $d_2$ = 2,942 | | |
| $r_3$ = 28,243 | $d_3$ = 6,611 | $n_2$ = 1,7550 | $\nu_2$ = 52,30 |
| $r_4$ = 78,065 | $d_4$ = 4,958 | $n_3$ = 1,5254 | $\nu_3$ = 35,56 |
| $r_5$ = 29,234 | $d_5$ = 6,988 | | |
| $r_6$ = 48,279 | $d_6$ = 1,983 | $n_4$ = 1,7725 | $\nu_4$ = 49,50 |
| $r_7$ = 61,979 | $d_7$ = 3,303 | | |
| $r_8$ = 735,997 | $d_8$ = 19,278 | $n_5$ = 1,6180 | $\nu_5$ = 63,40 |
| $r_9$ = -18,981 | $d_9$ = 1,983 | $n_6$ = 1,6568 | $\nu_6$ = 33.01 |
| $r_{10}$ = -27,595 | $d_{10}$ = 0,337 | | |
| $r_{11}$ = -100,513 | $d_{11}$ = 5,831 | $n_7$ = 1,6180 | $\nu_7$ = 63,40 |
| $r_{12}$ = -44,952 | $d_{12}$ = 2,578 | | |
| $r_{13}$ = -27,416 | $d_{13}$ = 2,512 | $n_8$ = 1,4645 | $\nu_8$ = 65,77 |
| $r_{14}$ = 158,107 | | | |

$\Sigma d$ = 62,494

worin f die Brennweite des Objektivs, $r_1$ bis $r_{14}$ die Krümmungsradien der Linsenflächen, $d_1$ bis $d_{13}$ Axialabstände der Flächen, $n_1$ bis $n_8$ die Brechzahlen, $\nu_1$ bis $\nu_8$ die Abbe-Zahlen und $\Sigma d$ die Summe der Axialabstände der Flächen bedeuten.

## Claims

**1.** Wide angle objective consisting of six elements, eight lenses and a diaphragm, the central, collecting objective section consisting of two cemented elements and two isolated lenses, being surrounded at the object side by a negative meniscus (L1), and at the image side by a negative lens (L6),
**characterized**
**by** its central objective section being composed of a positive meniscus lens element (L2) consisting of a positive lens (L2a) and a negative lens (L2b), a positive meniscus lens (L3), a diaphragm, a positive lens element (L4) consisting of a positive lens (L4a) and a negative lens (L4b), and a positive meniscus lens element (L5),
**by** the subsequent negative lens (L6) being biconcave, the greater radius in absolute value being at the image side,
**and by** the following criteria being fulfilled:

$$(1)\quad d_2 + d_{12} < \frac{(d_8 + d_9)}{2}$$

$$(2)\quad (d_7 + d_8 + d_9 + d_{10} + d_{11} + d_{12} + d_{13}) > 0,48 \cdot \Sigma d$$

$$(3)\quad n_1 < 1,55 \text{ und } n_8 < 1,55$$

$$(4)\quad \frac{n_2 + n_3 + n_4 + n_5 + n_6 + n_7}{6} > 1,62$$

in which

| | |
|---|---|
| d2 to d13 | are the axial distances of the surfaces (lens, thickness or air gaps) |
| $\Sigma d$ | Sum of the axial distances of the surfaces |
| $n_1$ to $n_8$ | Refractive indices of the lenses 1 to 8. |

**2.** Wide angle objective according to claim 1 characterized by having the following parameters:

f = 100 mm, back focal distance = 81.9 mm
relative aperture = 1 : 5.6, angle of view = 70°
relative aperture = 1 : 11.0, angle of view = 80°

| | | | |
|---|---|---|---|
| $r_1$ = 39,152 | $d_1$ = 2,517 | $n_1$ = 1,4645 | $\nu_1$ = 65,77 |
| $r_2$ = 20,221 | $d_2$ = 3,510 | | |
| $r_3$ = 29,516 | $d_3$ = 6,523 | $n_2$ = 1,7550 | $\nu_2$ = 52,30 |
| $r_4$ = 87,298 | $d_4$ = 4,967 | $n_3$ = 1,6254 | $\nu_3$ = 35,56 |
| $r_5$ = 29,998 | $d_5$ = 7,000 | | |
| $r_6$ = 48,217 | $d_6$ = 1,987 | $n_4$ = 1,7725 | $\nu_4$ = 49,60 |
| $r_7$ = 55,911 | $d_7$ = 3,312 | | |
| $r_8$ = 321,496 | $d_8$ = 19,312 | $n_5$ = 1,6204 | $\nu_5$ = 60,33 |
| $r_9$ = -19,009 | $d_9$ = 1,987 | $n_6$ = 1,6668 | $\nu_6$ = 33,01 |
| $r_{10}$ = -27,981 | $d_{10}$ = 0,338 | | |
| $r_{11}$ = -117,436 | $d_{11}$ = 5,841 | $n_7$ = 1,6204 | $\nu_7$ = 60,33 |
| $r_{12}$ = -44,843 | $d_{12}$ = 2,583 | | |
| $r_{13}$ = -28,475 | $d_{13}$ = 2,517 | $n_8$ = 1,4787 | $\nu_8$ = 58,70 |
| $r_{14}$ = 131,465 | $\Sigma d$ = 61,816 | | |

f being the focal length of the objective, $r_1$ to $r_{14}$ the lens surface radii, $d_1$ to $d_{13}$ the axial distances of the surfaces, $n_1$ to $n_8$ the refractive indices, $\nu_1$ to $\nu_8$ the Abbe numbers and $\Sigma d$ the sum of the axial distances of the surfaces.

**3.** Wide angle objective according to claim 1 characterized by having the following parameters:

f = 100 mm, back focal distance = 79,98 mm
relative aperture = 1 : 5.6, angle of view = 70°
relative aperture = 1 : 11.0, angle of view = 80°

| | | | |
|---|---|---|---|
| $r_1$ = 40,585 | $d_1$ = 2,512 | $n_1$ = 1,4645 | $\nu_1$ = 65,77 |
| $r_2$ = 20,329 | $d_2$ = 2,942 | | |
| $r_3$ = 28,243 | $d_3$ = 6,611 | $n_2$ = 1,7550 | $\nu_2$ = 52,30 |
| $r_4$ = 78,065 | $d_4$ = 4,958 | $n_3$ = 1,5254 | $\nu_3$ = 35,56 |
| $r_5$ = 29,234 | $d_5$ = 6,988 | | |
| $r_6$ = 48,279 | $d_6$ = 1,983 | $n_4$ = 1,7725 | $\nu_4$ = 49,60 |
| $r_7$ = 61,979 | $d_7$ = 3,303 | | |
| $r_8$ = 735,997 | $d_8$ = 19,278 | $n_5$ = 1,6180 | $\nu_5$ = 63,40 |
| $r_9$ = -18,981 | $d_9$ = 1,983 | $n_6$ = 1,6668 | $\nu_6$ = 33,01 |
| $r_{10}$ = -27,595 | $d_{10}$ = 0,337 | | |
| $r_{11}$ = -100,513 | $d_{11}$ = 5,831 | $n_7$ = 1,6180 | $\nu_7$ = 63,40 |
| $r_{12}$ = -44,952 | $d_{12}$ = 2,578 | | |
| $r_{13}$ = -27,416 | $d_{13}$ = 2,512 | $n_8$ = 1,4645 | $\nu_8$ = 65,77 |
| $r_{14}$ = 158,107 | | | |
| | $\Sigma d$ = 62,494 | | |

f being the focal length of the objective, $r_1$ to $r_{14}$ the lens surface radii, $d_1$ to $d_{13}$ the axial distances of the surfaces, $n_1$ to $n_8$ the refractive indices, $\nu_1$ to $\nu_8$ the Abbe numbers and Σd the sum of the axial distances of the surfaces.

## Revendications

1. Objectif grand angulaire composé de six éléments, huit lentilles et un diaphragme, la section centrale collectrice de l'objectif composée de deux éléments cimentés et de deux lentilles isolées étant entourée par un ménisque (L1) négatif du côté objet et par une lentille négative (L6) du côté image,
**caractérisé en ce**
**que** la partie centrale de l'objectif est composée d'un élément de lentille-ménisque positif (L2) comprenant une lentille positive (L2a) et une lentille négative (L2b), d'une lentille-ménisque positive (L3), d'un diaphragme, d'un élément de lentille positif (L4) comprenant une lentille positive (L4a) et une lentille négative (L4b), et d'un élément de lentille-ménisque positif (L5),
**que** la lentille négative suivante (L6) est biconcave, le rayon plus grand en valeur absolue étant du côté de l'image,
**et que** les conditions suivantes sont remplies:

$$(1) \quad d_2 + d_{12} < \frac{(d_8 + d_9)}{2}$$

$$(2) \quad (d_7 + d_8 + d_9 + d_{10} + d_{11} + d_{12} + d_{13}) > 0{,}48 \cdot \Sigma d$$

$$(3) \quad n_1 < 1{,}55 \text{ und } n_8 < 1{,}55$$

$$(4) \quad \frac{n_2 + n_3 + n_4 + n_5 + n_6 + n_7}{6} > 1{,}62$$

avec:

| | |
|---|---|
| $d_2$ à $d_{13}$ | les distances axiales des surfaces (épaisseurs des lentilles ou espacements) |
| $\Sigma d$ | Somme des distances axiales des surfaces |
| $n_1$ to $n_8$ | Indices de réfraction des lentilles 1 à 8. |

**2.** Objectif grand angulaire selon la revendication 1, caractérisé en ce qu'il a les paramètres suivants::

f = 100 mm, tirage optique = 81.9 mm
ouverture relative = 1 : 5.6, champ d'image = 70°
ouverture relative = 1 : 11.0, champ d'image = 80°

| | | | |
|---|---|---|---|
| $r_1$ = 39,152 | $d_1$ = 2,517 | $n_1$ = 1,4645 | $\nu_1$ = 65,77 |
| $r_2$ = 20,221 | $d_2$ = 3,510 | | |
| $r_3$ = 29,616 | $d_3$ = 6,623 | $n_2$ = 1,7550 | $\nu_2$ = 52,30 |
| $r_4$ = 87,298 | $d_4$ = 4,967 | $n_3$ = 1,6254 | $\nu_3$ = 35,56 |
| $r_5$ = 29,998 | $d_5$ = 7,000 | | |
| $r_6$ = 48,217 | $d_6$ = 1,987 | $n_4$ = 1,7725 | $\nu_4$ = 49,60 |
| $r_7$ = 55,911 | $d_7$ = 3,312 | | |
| $r_8$ = 321,496 | $d_8$ = 19,312 | $n_5$ = 1,6204 | $\nu_5$ = 60,33 |
| $r_9$ = -19,009 | $d_9$ = 1,987 | $n_6$ = 1,6668 | $\nu_6$ = 33,01 |
| $r_{10}$ = -27,981 | $d_{10}$ = 0,338 | | |
| $r_{11}$ = -117,436 | $d_{11}$ = 5,841 | $n_7$ = 1,6204 | $\nu_7$ = 60,33 |
| $r_{12}$ = -44,848 | $d_{12}$ = 2,583 | | |
| $r_{13}$ = -23,475 | $d_{13}$ = 2,517 | $n_8$ = 1,4787 | $\nu_8$ = 58,70 |
| $r_{14}$ = 131,465 | $\Sigma d$ = 61,816 | | |

f étant la distance focale de l'objectif, $r_1$ à $r_{14}$ les rayons des surfaces des lentilles, $d_1$ à $d_{13}$ les distances axiales des surfaces, $n_1$ à $n_8$ les indices de réfraction, $\nu_1$ a $\nu_8$ les nombres d'Abbe et $\Sigma d$ la somme des distances axiales des surfaces.

**3.** Objectif grand angulaire selon la revendication 1, caractérisé en ce qu'il a les paramètres suivants:

f = 100 mm, tirage optique = 79.98 mm
ouverture relative = 1 : 5.6, champ d'image = 70°
ouverture relative = 1 : 11.0, champ d'image = 80°

| | | | |
|---|---|---|---|
| $r_1$ = 40,585 | $d_1$ = 2,512 | $n_1$ = 1,4645 | $\nu_1$ = 65,77 |
| $r_2$ = 20,329 | $d_2$ = 2,942 | | |
| $r_3$ = 28,243 | $d_3$ = 6,611 | $n_2$ = 1,7550 | $\nu_2$ = 52,30 |
| $r_4$ = 78,065 | $d_4$ = 4,958 | $n_3$ = 1,6254 | $\nu_3$ = 35,56 |
| $r_5$ = 29,234 | $d_5$ = 6,988 | | |
| $r_6$ = 48,279 | $d_6$ = 1,983 | $n_4$ = 1,7725 | $\nu_4$ = 49,60 |
| $r_7$ = 61,979 | $d_7$ = 3,303 | | |
| $r_8$ = 735,997 | $d_8$ = 19,278 | $n_5$ = 1,6180 | $\nu_5$ = 63,40 |
| $r_9$ = -18,981 | $d_9$ = 1,983 | $n_6$ = 1,6668 | $\nu_6$ = 33,01 |
| $r_{10}$ = -27,595 | $d_{10}$ = 0,337 | | |
| $r_{11}$ = -100,513 | $d_{11}$ = 5,831 | $n_7$ = 1,6180 | $\nu_7$ = 63,40 |
| $r_{12}$ = -44,952 | $d_{12}$ = 2,578 | | |
| $r_{13}$ = -27,416 | $d_{13}$ = 2,512 | $n_8$ = 1,4645 | $\nu_8$ = 65,77 |
| $r_{14}$ = 158,107 | | | |
| | $\Sigma d$ = 62,494 | | |

f étant la distance focale de l'objectif, $r_1$ à $r_{14}$ les rayons des surfaces des lentilles, $d_1$ à $d_{13}$ les distances axiales des surfaces, $n_1$ à $n_8$ les indices de réfraction, $\nu_1$ à $\nu_8$ les nombres d'Abbe et $\Sigma d$ la somme des distances axiales des surfaces.

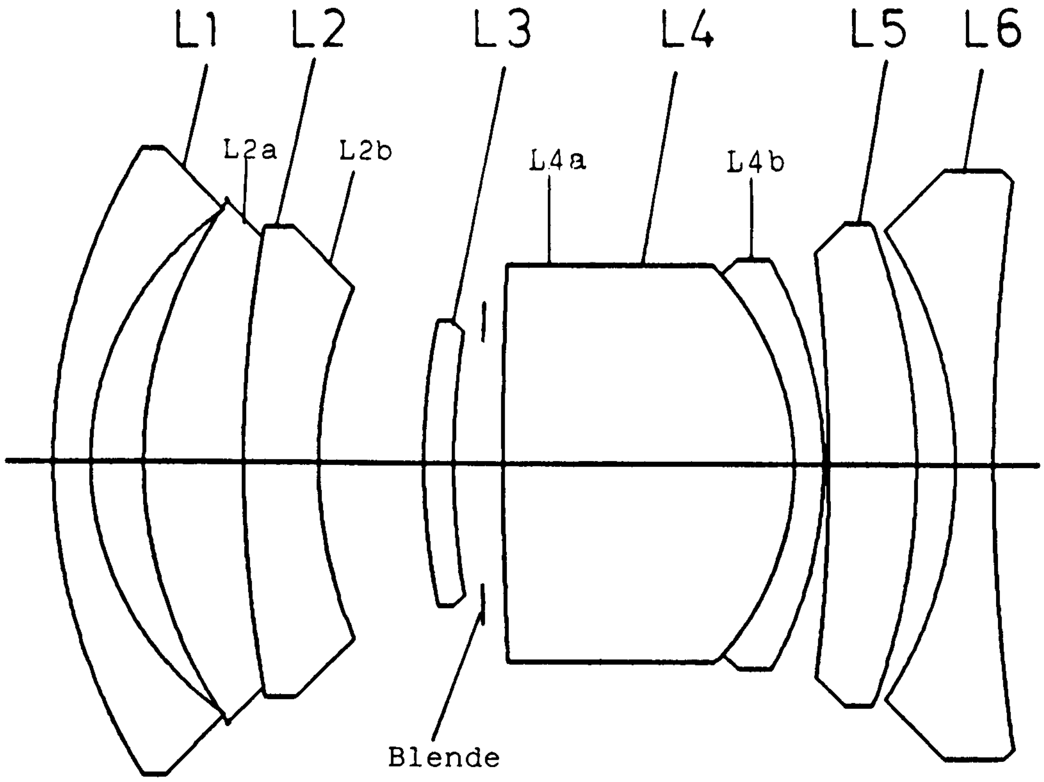


FIGUR 1

FIGUR 2

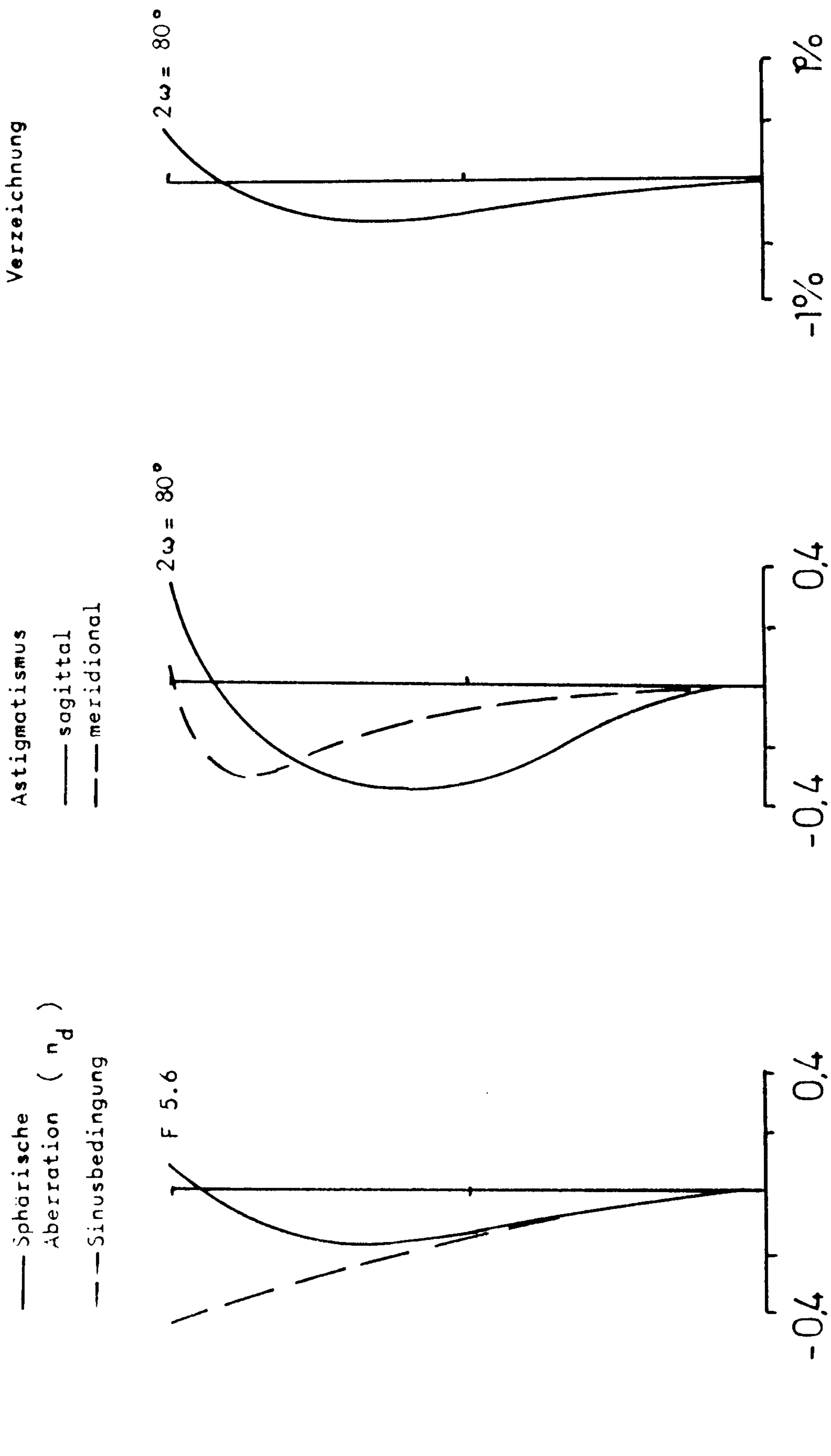

Sphärische Aberration ( $n_d$ )
Sinusbedingung
F 5.6
-0,4
0,4
Astigmatismus
sagittal
meridional
2ω = 80°
-0,4
0,4
Verzeichnung
2ω = 80°
-1%
1%

FIGUR 3

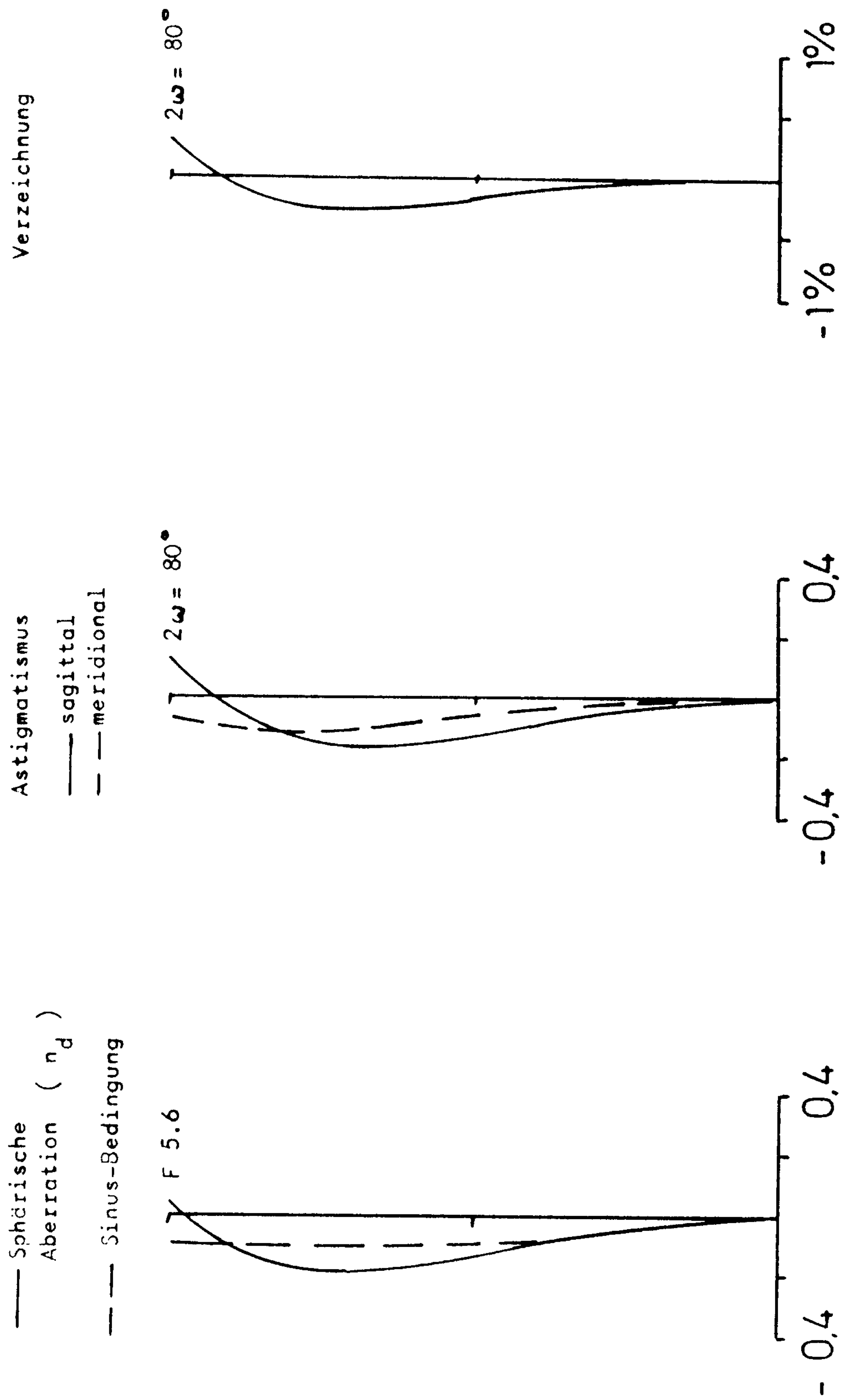

Sphärische Aberration ( $n_d$ )
Sinus-Bedingung
F 5.6
0,4
-0,4
Astigmatismus
sagittal
meridional
2ω = 80°
0,4
-0,4
Verzeichnung
2ω = 80°
1%
-1%